# EUROPÄISCHE PATENTANMELDUNG

(11) **EP 3 650 323 A1**
(43) Veröffentlichungstag der Anmeldung: **13.05.2020**
(21) Anmeldenummer: 19206107.5
(22) Anmeldetag: 30.10.2019
(51) Int. Cl.: B62J 1/08

(54) **SATTELSTÜTZE FÜR EIN FAHRRAD**

(30) Priorität: 08.11.2018 DE 102018219057
(71) Anmelder: Robert Bosch GmbH, 70442 Stuttgart (DE)
(72) Erfinder: Haeusler, Manuel, 71296 Heimsheim (DE); Moia, Alessandro, 71088 Holzgerlingen (DE)

(57) **Zusammenfassung**

Die vorliegende Erfindung betrifft eine Sattelstütze (1) eines Fahrrads (2), aufweisend ein mit einem Rahmen (4) des Fahrrads (2) verbindbares erstes Rohr (11), ein mit einem Sattel (3) verbindbares zweites Rohr (12),
wobei das erste Rohr (11) und das zweite Rohr (12) ineinander einschiebbar sind, wobei in dem ersten Rohr (11) und/oder dem zweiten Rohr (12) eine erste Fluidkammer (5) und eine davon abgetrennte zweite Fluidkammer (6) gebildet sind, wobei zumindest die erste Fluidkammer (5) sowohl durch das erste Rohr (11) als auch durch das zweite Rohr (12) begrenzt ist, sodass anhand eines Volumens der ersten Fluidkammer (5) einstellbar ist, wie weit das erste Rohr (11) und das zweite Rohr (12) ineinander eingeschoben sind, wobei ein Fluidfluss zwischen erster Fluidkammer (5) und zweiter Fluidkammer (6) durch eine Ventilvorrichtung (9) einstellbar ist, und wobei durch eine Pumpvorrichtung (10) Fluid von der zweiten Fluidkammer (6) in die erste Fluidkammer (5) pumpbar ist.

## Beschreibung

### Stand der Technik

Die vorliegende Erfindung betrifft eine Sattelstütze eines Fahrrads. Außerdem betrifft die Erfindung ein Fahrrad, umfassend eine derartige Sattelstütze.

Aus dem Stand der Technik sind Sattelstützen von Fahrrädern bekannt. Diese dienen dazu, einen Abstand zwischen Rahmen und Sattel an den Benutzer des Fahrrads individuell anzupassen. Die Sattelhöhe hat einen großen Einfluss auf die Fahrstabilität und die Stabilität während des Aufsteigens sowie Absteigens. Beispielsweise erleichtert eine niedrige Sattelhöhe das Aufsteigen und Anfahren sowie das Abbremsen und Absteigen vom Rad, da der Fahrer mit den Füßen einen ständigen Kontakt zum Boden hat. Eine höhere Sattelhöhe wirkt sich dagegen positiv auf die Ermüdungsdauer der Muskulatur aus, da der Fahrer eine ergonomischere Fahrposition aufweist.

Aus dem Stand der Technik sind insbesondere absenkbare Sattelstützen bekannt. Diese werden üblicherweise im Segment der Mountainbikes eingesetzt. Üblicherweise ist hierzu eine mechanisch angesteuerte Sattelstütze vorhanden, die der Fahrer über einen Kabelzug bedienen kann. Andere Sattelstützen sind aus den Dokumenten DE 10 2017 213 606 A1, US20170096184 A1, US2013/0221713 A1 und WO 2016/113673 A1 bekannt. Andere Beispiele für andere Sattelstützen zeigen die DE 20 2011 103 073 U1, die De 10 2011 113 309 A1 sowie die DE 2096 13 657 U1.

### Offenbarung der Erfindung

Die erfindungsgemäße Sattelstütze hat den Vorteil, dass der Sattel zum Ausfahren der Sattelstütze, das heißt zum Anheben des Sattels, nicht entlastet werden muss. Dies ermöglicht insbesondere die Bereitstellung von intelligenten Regelungen, da die Sattelhöhe ohne aktives Zutun des Fahrers, wie beispielsweise ein Entlasten des Sattels, erfolgen kann. Vorteilhafterweise ist vorgesehen, dass diese Funktionalität dadurch erreicht wird, dass eine Pumpenvorrichtung vorhanden ist, um Hydraulik-Öl zwischen verschiedenen Fluid-Kammern umzupumpen. Alternativ kann anstelle des Hydraulik-Öls auch ein anderes Fluid verwendet werden. Eine zusätzlich vorhandene Ventilvorrichtung ist insbesondere elektrisch angesteuert und somit automatisierbar.

Die Sattelstütze eines Fahrrads weist ein erstes Rohr und ein zweites Rohr auf. Das erste Rohr ist mit dem Rahmen des Fahrrads verbindbar, während das zweite Rohr mit einem Sattel des Fahrrads verbindbar ist. Das erste Rohr und das zweite Rohr sind ineinander einschiebbar. Vorteilhaferweise ist das zweite Rohr in das erste Roh einschiebbar, alternativ kann auch das erste Rohr in das zweite Rohr einschiebbar sein. Ist das erste Rohr mit dem Rahmen verbunden und das zweite Rohr mit dem Sattel, so kann durch Ineinander-Einschieben von erstem Rohr und zweitem Rohr eine Höhe des Sattels über dem Rahmen eingestellt werden.

Weiterhin ist vorgesehen, dass in dem ersten Rohr und/oder dem zweiten Rohr eine erste Fluidkammer und eine davon abgetrennte zweite Fluidkammer gebildet sind. Zumindest die erste Fluidkammer ist sowohl durch das erste Rohr, als auch durch das zweite Rohr begrenzt. Dies bedeutet insbesondere, dass die erste Fluidkammer in Kontakt mit fest stehenden Komponenten des ersten Rohrs sowie mit fest stehenden Komponenten des zweiten Rohrs steht. Auf diese Weise ist anhand eines Volumens der ersten Fluidkammer einstellbar, wie weit das erste Rohr und das zweite Rohr ineinander eingeschoben sind. Insbesondere kann durch Vergrößern des Volumens der ersten Fluidkammer durch Umpumpen von Fluid von der ersten Fluidkammer in die zweite Fluidkammer ein Ausfahren der Sattelstütze erreicht werden, wodurch der Sattel höher über dem Rahmen positioniert werden kann. Durch Verringern des Volumens der ersten Fluidkammer durch Umpumpen von Fluid von der ersten Fluidkammer zu der ersten Fluidkammer kann die Sattelstütze eingefahren werden, um den Sattel niedriger zu positionieren. Ein Fluidfluss zwischen erster Fluidkammer und zweiter Fluidkammer ist durch eine Ventilvorrichtung einstellbar. Zusätzlich ist eine Pumpvorrichtung vorhanden, über die Fluid von der zweiten Fluidkammer in die erste Fluidkammer pumpbar ist. Die Pumpvorrichtung ermöglicht somit das Volumen der ersten Fluidkammer zu vergrößern, selbst wenn die Sattelstütze belastet ist, indem ein Fahrer auf dem Sattel des Fahrrads sitzt. Dadurch ist insbesondere das zuvor beschriebene Vermeiden einer Entlastung der Sattelstütze zum Anheben des Sattels erreicht. Die Sattelstütze kann somit jederzeit abgesenkt und angehoben werden, um somit eine automatisierte Satteleinstellfunktion zu ermöglichen. Dadurch lässt sich ein erheblicher Komfortgewinn bei der Verwendung des Fahrrads erreichen.

Die Unteransprüche haben bevorzugte Weiterbildungen der Erfindung zum Inhalt.

Bevorzugt ist vorgesehen, dass von der ersten Fluidkammer oder von der zweiten Fluidkammer eine Luftkammer abgegrenzt ist. Eine Volumenänderung der ersten Fluidkammer und/oder der zweiten Fluidkammer führt zu einer Kompression oder Dekompression eines Gases, insbesondere von Luft, innerhalb der Luftkammer. Auf diese Weise ist insbesondere beim Absenken der Sattelstütze besagte Luft komprimierbar, sodass zum Anheben der Sattelstütze eine Rückstellkraft auf die Sattelstütze wirkt. Auf diese Weise lässt sich insbesondere das Anheben der Sattelstütze durch Umpumpen von Fluid von der zweiten Fluidkammer zu der ersten Fluidkammer unterstützen. Besonders vorteilhaft ist ein Umpumpen von Fluid von der ersten Fluidkammer in die zweite Fluidkammer nur gegen besagte Rückstellkraft möglich, indem die zweite Fluidkammer nur bei gleichzeitiger Kompression der Luft in der Luftkammer vergrößert werden kann.

Das erste Rohr oder das zweite Rohr weisen bevorzugt ein Abtrennelement auf, das zum Abtrennen von erster Fluidkammer und zweiter Fluidkammer ausgebildet ist. In besagtem Abtrennelement ist bevorzugt die Ventilvorrichtung angeordnet. Das Abtrennelement ist fest mit dem ersten Rohr oder dem zweiten Rohr verbunden und somit nicht bezüglich dem ersten Rohr oder dem zweiten Rohr beweglich. Das Abtrennelement ist vorteilhafterweise entweder ausschließlich in dem ersten Rohr oder dem zweiten Rohr angeordnet oder ist alternativ als Kolben in dem jeweils anderen Rohr geführt.

Bevorzugt ist außerdem vorgesehen, dass das erste Rohr ein Zylinderelement aufweist. Das Zylinderelement grenzt die erste Fluidkammer von der zweiten Fluidkammer ab. In dem Zylinderelement ist ein Kolbenelement des zweiten Rohres geführt. Dabei ist vorgesehen, dass durch das Zylinderelement und das Kolbenelement die erste Fluidkammer begrenzt ist, während außerhalb des Zylinderelements die zweite Fluidkammer angeordnet ist. Insbesondere ist vorgesehen, dass das Zylinderelement eine kleinere Querschnittsfläche aufweist als das gesamte erste Rohr, sodass insbesondere erste Fluidkammer und zweite Fluidkammer in einer Richtung senkrecht zu der Verfahrrichtung der Sattelstütze nebeneinander angeordnet sind. In einer alternativen Ausgestaltung ist das Zylinderelement nicht in dem ersten Rohr, sondern in dem zweiten Rohr angeordnet, während das Kolbenelement Teil des ersten Rohres ist.

Vorteilhafterweise weist die Ventilvorrichtung zum Steuern des Fluidflusses zwischen erster Fluidkammer und zweiter Fluidkammer einen ersten Zweig und einen zweiten Zweig auf. Dabei dient der erste Zweig ausschließlich für einen Fluidfluss von der ersten Fluidkammer in die zweite Fluidkammer. Dies wird dadurch erreicht, dass der erste Zweig ein erstes Rückschlagventil aufweist, das ausschließlich diesen Fluidfluss von der ersten Fluidkammer zu der zweiten Fluidkammer ermöglicht. Der zweite Zweig hingegen dient einem Fluidfluss von der zweiten Fluidkammer in die erste Fluidkammer. Dies wird durch ein zweites Rückschlagventil im zweiten Zweig erreicht, dass lediglich einen Fluidfluss von der zweiten Fluidkammer in die erste Fluidkammer ermöglicht. Die Pumpvorrichtung ist in dem zweiten Zweig angeordnet. Somit kann über den ersten Zweig Fluid von der ersten Fluidkammer in die zweite Fluidkammer abgelassen werden, um die Sattelstütze abzusenken. Über den zweiten Zweig kann Fluid von der zweiten Fluidkammer in die erste Fluidkammer gepumpt werden, um die Sattelstütze anzuheben. Aufgrund der Pumpvorrichtung ist das Anheben der Sattelstütze auch im nicht entlasteten Zustand ermöglicht.

Besonders vorteilhaft ist vorgesehen, dass in dem ersten Zweig ein erstes Ventil und in dem zweiten Zweig ein zweites Ventil vorgesehen ist. Durch das erste Ventil ist ein Durchfluss durch den ersten Zweig wahlweise freigebbar und sperrbar. Durch das zweite Ventil ist ein Durchfluss durch den zweiten Zweig wahlweise freiggebbar und sperrbar. Bei dem ersten Ventil und dem zweiten Ventil handelt es sich vorteilhafterweise um elektrisch angesteuerte Ventile. Somit ist einfach und aufwandsarm ansteuerbar, ob die Sattelstütze abgesenkt oder angehoben werden soll.

Das erste Ventil ist besonders vorteilhaft eine einstellbare Drossel. Die einstellbare Drossel dient insbesondere zum vollständigen Verschließen des ersten Zweiges. Somit kann insbesondere eine Geschwindigkeit des Absenkens der Sattelstütze eingestellt werden. Ist ein hoher Fluidfluss zwischen erster Fluidkammer und zweiter Fluidkammer durch die einstellbare Drossel erlaubt, so erfolgt ein rasches Absenken der Sattelstütze. Hingegen kann bei einem geringen erlaubten Fluidfluss zwischen erster Fluidkammer und zweiter Fluidkammer auch ein langsames Absenken der Sattelstütze erreicht werden.

In einer alternativen Ausgestaltung ist vorteilhafterweise vorgesehen, dass eine einstellbare Drossel seriell zu dem ersten Zweig und dem zweiten Zweig angeordnet ist. Dadurch ist ein gesamter Fluidfluss durch die einstellbare Drossel einstellbar. Unabhängig davon, ob Fluid durch den ersten Zweig oder den zweiten Zweig strömt, muss das Fluid stets die einstellbare Drossel passieren. Somit lässt sich insbesondere neben dem zuvor beschriebenen Einstellen der Geschwindigkeit des Absenkens der Sattelstütze auch eine Anhebegeschwindigkeit der Sattelstütze einstellen.

In einer weiteren vorteilhaften Ausgestaltung ist in dem ersten Zweig eine konstante Drossel angeordnet. Auf diese Weise ist eine Absenkgeschwindigkeit der Sattelstütze auf einen festen Wert eingestellt. Dadurch ist insbesondere verhinderbar, dass ein zu rasches und damit unkomfortables Absenken der Sattelstütze erfolgt.

Die Erfindung betrifft außerdem ein Fahrrad. Das Fahrrad umfasst eine Sattelstütze wie zuvor beschrieben. Dabei ist vorgesehen, dass durch die Sattelstütze ein Sattel an einem Rahmen des Fahrrads angebracht ist. Durch die Sattelstütze ist eine Höhe des Sattels über dem Rahmen einstellbar. Dieses Einstellen ist insbesondere auch durch ein Anheben des Sattels ermöglicht, selbst wenn der Sattel durch einen Fahrer des Fahrrads belastet ist.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Fahrrads gemäß einem Ausführungsbeispiel der Erfindung,
- Figur 2: eine schematische Ansicht einer Sattelstütze gemäß einem ersten Ausführungsbeispiel der Erfindung,
- Figur 3: eine schematische Ansicht einer Sattelstütze gemäß einem zweiten Ausführungsbeispiel der Erfindung
- Figur 4: eine schematische Ansicht einer Sattelstütze gemäß einem dritten Ausführungsbeispiel der Erfindung
- Figur 5: eine schematische Ansicht einer Sattelstütze gemäß einem vierten Ausführungsbeispiel der Erfindung
- Figur 6: eine schematische Ansicht einer Sattelstütze gemäß einem fünften Ausführungsbeispiel der Erfindung
- Figur 7: eine schematische Ansicht einer Sattelstütze gemäß einem sechsten Ausführungsbeispiel der Erfindung
- Figur 8: eine schematische Ansicht einer Sattelstütze gemäß einem siebten Ausführungsbeispiel der Erfindung
- Figur 9: eine schematische Ansicht einer Sattelstütze gemäß einem achten Ausführungsbeispiel der Erfindung
- Figur 10: eine schematische Ansicht einer Sattelstütze gemäß einem neunten Ausführungsbeispiel der Erfindung
- Figur 11: eine schematische Ansicht einer Sattelstütze gemäß einem zehnten Ausführungsbeispiel der Erfindung
- Figur 12: eine schematische Ansicht einer Sattelstütze gemäß einem elften Ausführungsbeispiel der Erfindung
- Figur 13: eine schematische Ansicht einer Sattelstütze gemäß einem zwölften Ausführungsbeispiel der Erfindung
- Figur 14: eine schematische Ansicht einer Sattelstütze gemäß einem dreizehnten Ausführungsbeispiel der Erfindung
- Figur 15: eine schematische Ansicht einer Sattelstütze gemäß einem vierzehnten Ausführungsbeispiel der Erfindung
- Figur 16: eine schematische Ansicht einer Sattelstütze gemäß einem fünfzehnten Ausführungsbeispiel der Erfindung
- Figur 17: eine schematische Ansicht einer Sattelstütze gemäß einem sechzehnten Ausführungsbeispiel der Erfindung
- Figur 18: eine schematische Ansicht einer Sattelstütze gemäß einem siebzehnten Ausführungsbeispiel der Erfindung
- Figur 19: eine schematische Ansicht einer Sattelstütze gemäß einem achtzehnten Ausführungsbeispiel der Erfindung,
- Figur 20: eine schematische Ansicht eine ersten Alternative der Ventilvorrichtung der Sattelstütze gemäß einem Ausführungsbeispiel der Erfindung,
- Figur 21: eine schematische Ansicht einer zweiten Alternative der Ventilvorrichtung der Sattelstütze gemäß einem Ausführungsbeispiel der Erfindung,
- Figur 22: eine schematische Ansicht einer dritten Alternative der Ventilvorrichtung der Sattelstütze gemäß einem Ausführungsbeispiel der Erfindung,
- Figur 23: eine schematische Ansicht einer vierten Alternative der Ventilvorrichtung der Sattelstütze gemäß einem Ausführungsbeispiel der Erfindung,
- Figur 24: eine schematische Detailzeichnung einer ersten beispielhaften Ventilanordnung der Sattelstütze gemäß einem Ausführungsbeispiel der Erfindung,
- Figur 25: eine schematische Detailzeichnung einer zweiten beispielhaften Ventilanordnung der Sattelstütze gemäß einem Ausführungsbeispiel der Erfindung,
- Figur 26: eine schematische Detailzeichnung einer dritten beispielhaften Ventilanordnung der Sattelstütze gemäß einem Ausführungsbeispiel der Erfindung, und
- Figur 27: eine schematische Detailzeichnung einer vierten beispielhaften Ventilanordnung einer Sattelstütze gemäß einem Ausführungsbeispiel der Erfindung

### Ausführungsformen der Erfindung

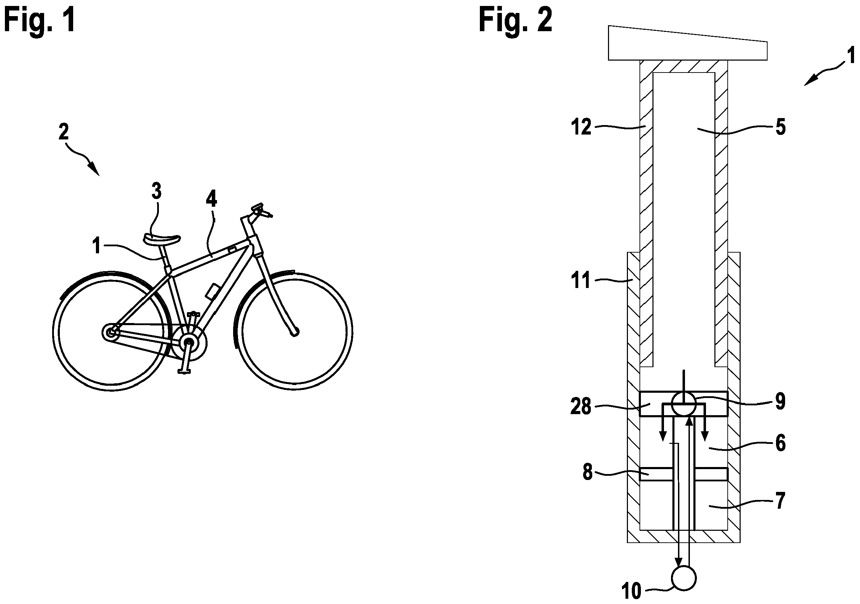

Figur 1 zeigt schematisch ein Fahrrad 2 gemäß einem Ausführungsbeispiel der Erfindung. Das Fahrrad 2 weist einen Rahmen 4 sowie einen Sattel 3 auf. Der Sattel 3 ist über eine Sattelstütze 1 gemäß einem Ausführungsbeispiel der Erfindung an dem Rahmen 4 angebracht. Durch die Sattelstütze 1 ist insbesondere eine Höhe des Sattels 3 über dem Rahmen 4 einstellbar. Dieses Einstellen ist insbesondere auch während einer Fahrt des Fahrrads 2 ermöglicht und insbesondere auch dann, während ein Benutzer des Fahrrads 2 auf dem Sattel 3 sitzt. Somit ist insbesondere ermöglicht, eine Höhe des Sattels 3 jederzeit an einen aktuellen Fahrzustand des Fahrrads anzupassen. So ist beispielsweise eine niedrige Sattelhöhe für das Aufsteigen und Anfahren sowie Abbremsen und Absteigen vorteilhaft, während für ein dauerhaftes Fahren eine höhere Sattelhöhe positiv ist.

Die Figuren 2 bis 19 zeigen schematisch verschiedene Ausführungsbeispiele der Sattelstütze 1. Dabei umfassen alle Ausführungsbeispiele der Sattelstütze 1 dieselben Grundkomponenten: So ist ein erster Rohr 11 und ein zweites Rohr 12 vorhanden, wobei das erste Rohr 11 mit dem Rahmen 4 verbindbar ist, während an dem zweiten Rohr 12 der Sattel 3 befestigbar ist. Das erste Rohr 11 und das zweite Rohr 12 sind vorteilhafterweise ineinander einschiebbar, wobei insbesondere vorgesehen ist, dass das zweite Rohr 12 einen kleineren Außendurchmesser aufweist als ein Innendurchmesser des ersten Rohrs 11, sodass das erste Rohr 11 das zweite Rohr 12 umschließt.

In dem ersten Rohr 11 und/oder dem zweiten Rohr 12 ist sowohl eine erste Fluidkammer 5, als auch eine zweite Fluidkammer 6 gebildet. Außerdem ist vorteilhafterweise eine Luftkammer 7 vorhanden, die durch einen Kolben 8 von der ersten Fluidkammer 5 oder der zweiten Fluidkammer 6 abgegrenzt ist. Der Kolben 8 und die Luftkammer 7 sind dabei optional und können bei Bedarf auch entfallen.

Zum Absenken der Sattelstütze 1 erfolgt ein Fördern von Fluid, insbesondere eines Hydraulik-Öls aus der ersten Fluidkammer 5 in die zweite Fluidkammer 6. Dadurch nimmt das Volumen der ersten Fluidkammer 5 ab, während das Volumen der zweiten Fluidkammer 6 zunimmt. Die Zunahme des Volumens der zweiten Fluidkammer 6 führt insbesondere zu einer Komprimierung der Luft in der Luftkammer 7. Die bei Ausdehnung der komprimierten Luft frei werdende Kraft dient zum Anheben des Sattels 3 während eines Ausfahrens der Sattelstütze 1.

Über eine Ventilvorrichtung 9 lässt sich die Sattelstütze 1 in jeder beliebigen Position fixieren, indem eine Verbindung zwischen erster Fluidkammer 5 und zweiter Fluidkammer 6 getrennt wird. Ist die Ventilvorrichtung 9 geöffnet, so kann Fluid von der Fluidkammer 5 in die zweite Fluidkammer 6 oder von der zweiten Fluidkammer 6 in die erste Fluidkammer 5 gefördert werden. Zum Fördern von Fluid von der zweiten Fluidkammer 6 in die erste Fluidkammer 5 ist eine Pumpvorrichtung 10 vorgesehen. Die Pumpvorrichtung 10 ermöglicht somit ein Anheben des Sattels 3 durch Vergrößern des Volumens der ersten Fluidkammer 5 selbst dann, wenn der Sattel 3 und damit die Sattelstütze 1 durch einen Benutzer des Fahrrads 2 belastet ist.

Im Folgenden werden die Ausführungsbeispiele einzeln beschrieben:
Figur 2 zeigt schematisch ein erstes Ausführungsbeispiel der Sattelstütze 1. Hierbei ist vorgesehen, dass das Abtrennelement 28 vollständig in dem ersten Rohr 11 angeordnet ist. Somit ist in dem ersten Rohr die zweite Fluidkammer 6 ebenso wie die Luftkammer 7 vorhanden. Die erste Fluidkammer 5 erstreckt sich von dem ersten Rohr 11 in das zweite Rohr 12. Wird Fluid von der ersten Fluidkammer 5 über die Ventilvorrichtung 9 in die zweite Fluidkammer 6 gefördert, so findet zwangsläufig eine Kompression der Luftkammer 7 statt, da der Kolben 8 zur Vergrößerung der zweiten Fluidkammer 6 verschoben wird. Somit übt die Luftkammer 7 auf den Kolben 8 eine elastische Rückstellkraft aus, die zum Fördern von Fluid von der zweiten Fluidkammer 6 in die erste Fluidkammer 5 verwendet werden kann. Eine solche Förderung von Fluid wird außerdem durch die Pumpvorrichtung 10 sichergestellt, sodass die elastische Rückstellkraft und die Pumpvorrichtung 10 gemeinsam Fluid aus der zweiten Fluidkammer 6 in die erste Fluidkammer 5 fördern können. Somit lässt sich die Sattelstütze 1 einfahren und ausfahren.

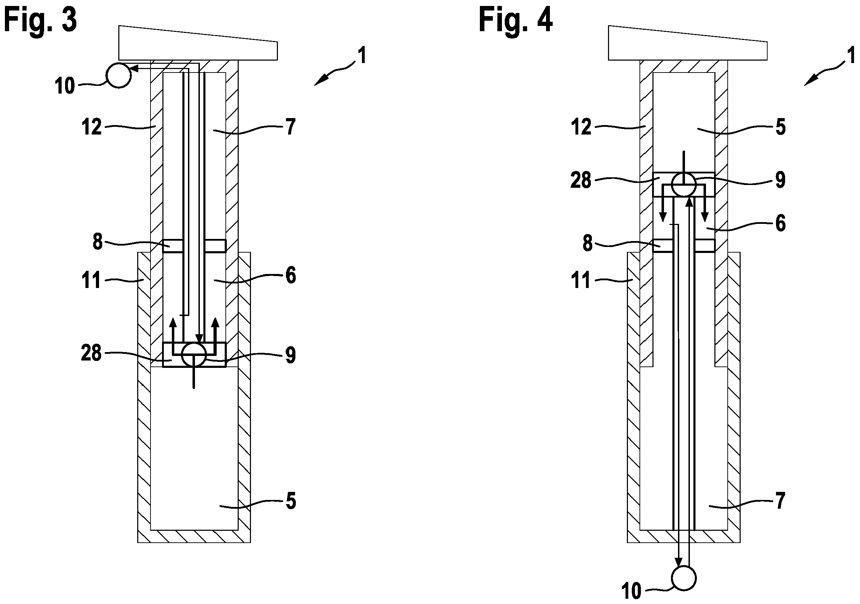

Figur 3 zeigt schematisch ein zweites Ausführungsbeispiel der Sattelstütze 1. In diesem Ausführungsbeispiel ist das Abtrennelement 28 in dem zweiten Rohr 12 angeordnet. Somit befindet sich die zweite Fluidkammer 6 ebenso wie die Luftkammer 7 vollständig in dem zweiten Rohr 12. Damit ist das erste Ausführungsbeispiel komplementär zu dem zweiten Ausführungsbeispiel aufgebaut. Die Funktionsweise ist allerdings identisch.

In dem in Figur 4 gezeigten dritten Ausführungsbeispiel der Sattelstütze 1 ist der Aufbau grundsätzlich identisch wie in dem ersten Ausführungsbeispiel, wobei das Abtrennelement 28 nicht ausschließlich in dem ersten Rohr 11 angeordnet ist, sondern bis in das zweite Rohr 12 reicht. Somit wirkt das Abtrennelement 28 als Kolbenelement in dem zweiten Rohr 12. Vorteilhafterweise bleibt allerdings die Summe der Volumina aus zweiter Fluidkammer und Luftkammer 7 nahezu konstant, unabhängig davon, in welcher relativen Stellung sich das erste Rohr 11 und das zweite Rohr 12 zueinander befinden. Somit ist die Funktionsweise des dritten Ausführungsbeispiels identisch zu dem ersten Ausführungsbeispiel.

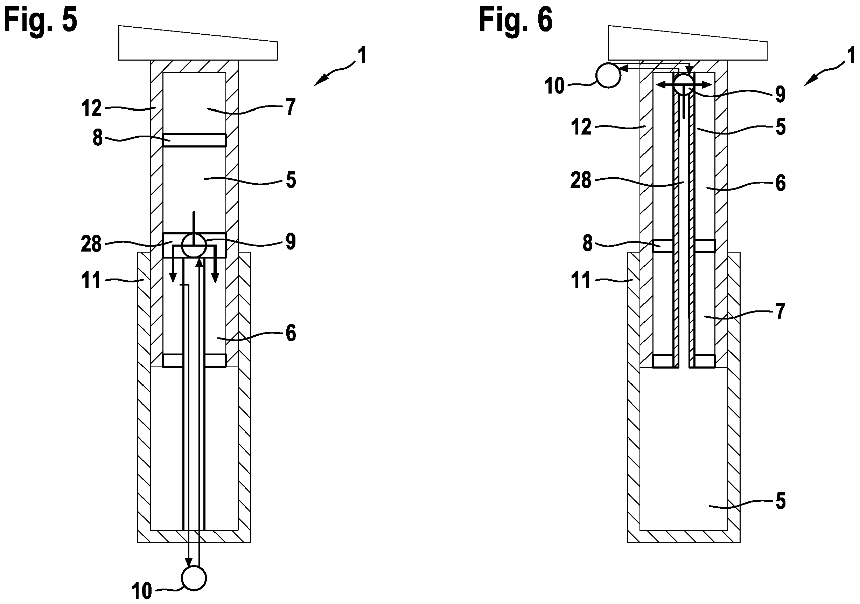

Figur 5 zeigt ein viertes Ausführungsbeispiel der Sattelstütze. Hierbei ist das Abtrennelement 28 auf dieselbe Art und Weise angeordnet wie in dem dritten Ausführungsbeispiel. Allerdings ist die erste Fluidkammer über den Kolben 8 von der Luftkammer 7 abgetrennt, nicht wie im dritten Ausführungsbeispiel die zweite Fluidkammer 6. Wird Fluid von der ersten Fluidkammer 5 in die zweite Fluidkammer 6 gefördert, so führt sowohl die Verringerung des Volumens der ersten Fluidkammer 5, als auch die Vergrößerung des Volumens der zweiten Fluidkammer 6 zu einem Absenken der Sattelstütze 1. Da eine Querschnittsfläche der ersten Fluidkammer 5 größer ist als eine Querschnittsfläche der zweiten Fluidkammer 6, ist durch das Fördern einer gewissen Fluidmenge von der ersten Fluidkammer 5 zu der zweiten Fluidkammer 6 aufgrund der Volumenzunahme der zweiten Fluidkammer 6 eine größere Absenkung der Sattelstütze 1 erreicht, als durch die Volumenverkleinerung der ersten Fluidkammer 5 ermöglicht wäre. Auf diese Weise erfolgt ein Komprimieren der Luftkammer 7, da der Kolben 8 als Ausgleich für die unterschiedlichen Veränderungen von erster Fluidkammer 5 und zweiter Fluidkammer 6 dient.

In Figur 6 ist ein fünftes Ausführungsbeispiel der Sattelstütze 1 gezeigt. Hierbei ist die erste Fluidkammer 5 in dem ersten Rohr 11 gebildet, wobei das Abgrenzelement 28 an dem zweiten Rohr 12 angebracht ist und die erste Fluidkammer begrenzt. Die zweite Fluidkammer 6 ist ebenso wie die Luftkammer 7 vollständig in dem ersten Rohr 12 angeordnet. Somit ist wiederum die Summe aus zweiter Fluidkammer 6 und Luftkammer 7 stets konstant, sodass eine Vergrößerung der zweiten Fluidkammer 6 zu einer Kompression der Luftkammer 7 aufgrund einer Verschiebung des Kolbens 8 führt. Das Abgrenzelement 28 umfasst insbesondere eine Hülse, um das Fluid aus der ersten Fluidkammer 5 bis einem oberen Ende des zweiten Rohrs 12 zu transportieren. Damit ist das fünfte Ausführungsbeispiel identisch zu dem zweiten Ausführungsbeispiel, wobei lediglich die Anordnung von zweiter Fluidkammer 6 und Luftkammer 7 im zweiten Rohr 12 vertauscht sind.

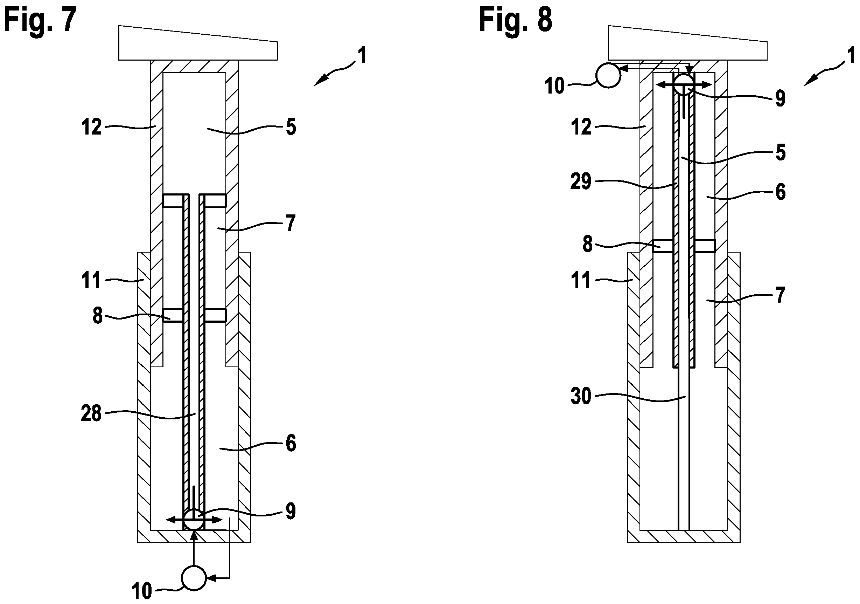

Gleiches gilt für das in Figur 7 gezeigte sechste Ausführungsbeispiel der Sattelstütze. Dieses ist grundsätzlich identisch zu dem dritten Ausführungsbeispiel ausgebildet, wobei wiederum die zweite Fluidkammer 6 und die Luftkammer 7 vertauscht sind. Dies wird erreicht durch die hülsenförmige Ausgestaltung des Abgrenzelements 28, um das Fluid aus der ersten Fluidkammer 5 an der Luftkammer 7 vorbei zu der zweiten Fluidkammer 6 und umgekehrt zu fördern.

In Figur 8 ist ein siebtes Ausführungsbeispiel der Sattelstütze 1 gezeigt. Hierbei weist das erste Rohr 11 ein Kolbenelement 30 auf, das in einem Zylinderelement 29 des zweiten Rohres 12 geführt ist. Durch das Zylinderelement 29 ist die erste Fluidkammer 5 von der zweiten Fluidkammer 6 abgegrenzt, wobei erste Fluidkammer 5 und zweite Fluidkammer 6 in einer Radialrichtung nebeneinander angeordnet sind. Dies bedeutet insbesondere, dass die zweite Fluidkammer 6 die erste Fluidkammer 5 umschließt. Dies ist insbesondere ein Unterschied zu den zuvor beschriebenen Ausführungsbeispielen, in denen insbesondere eine Trennung der ersten Fluidkammer 5 von der zweiten Fluidkammer 6 und von der Luftkammer 7 stets entlang der Verfahrrichtung der Sattelstütze 1 erfolgte. In dem siebten Ausführungsbeispiel sind erste Fluidkammer 5 und zweite Fluidkammer 6insbesondere auch in einer Richtung senkrecht zur Verfahrrichtung der Sattelstütze 1 nebeneinander anordenbar.

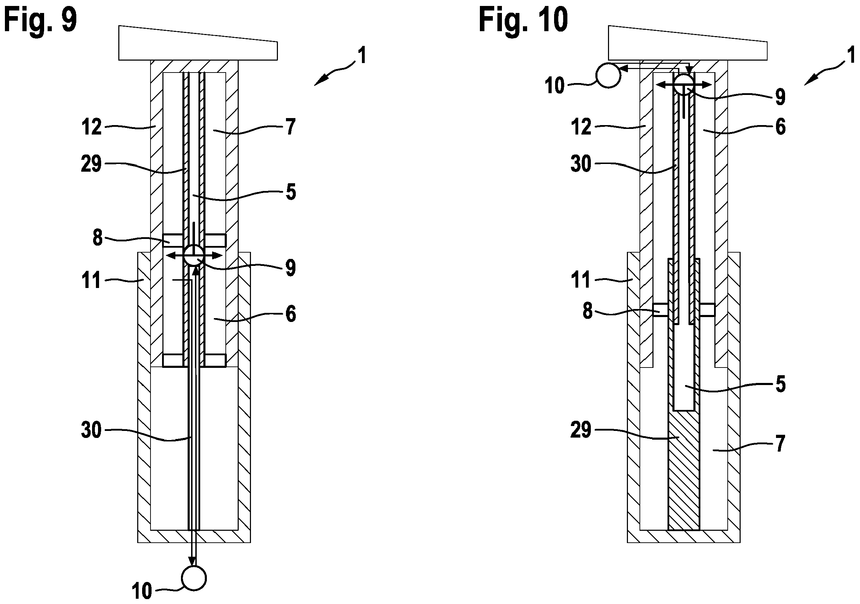

Figur 9 zeigt schematisch ein achtes Ausführungsbeispiel der Sattelstütze 1. Wiederum weist das erste Rohr 11 das Kolbenelement 30 auf. Das zweite Rohr 12 wiederum weist das Zylinderelement 29 auf. Im Unterschied zum siebten Ausführungsbeispiel sind die zweite Fluidkammer 6 und Luftkammer 7 vertauscht.

In dem in Figur 10 gezeigten neunten Ausführungsbeispiel der Sattelstütze 1 weist das erste Rohr 11 das Zylinderelement 29 auf, während das zweite Rohr 12 das Kolbenelement 30 umfasst. Wiederum befindet sich die erste Fluidkammer 5 innerhalb des Zylinderelements 29, wobei in diesem Ausführungsbeispiel auch das Kolbenelement 30 zumindest teilweise hohl ausgebildet ist und damit zur Aufnahme der ersten Fluidkammer 5 dient. Die zweite Fluidkammer 6 ist vollständig in dem zweiten Rohr 12 gebildet.

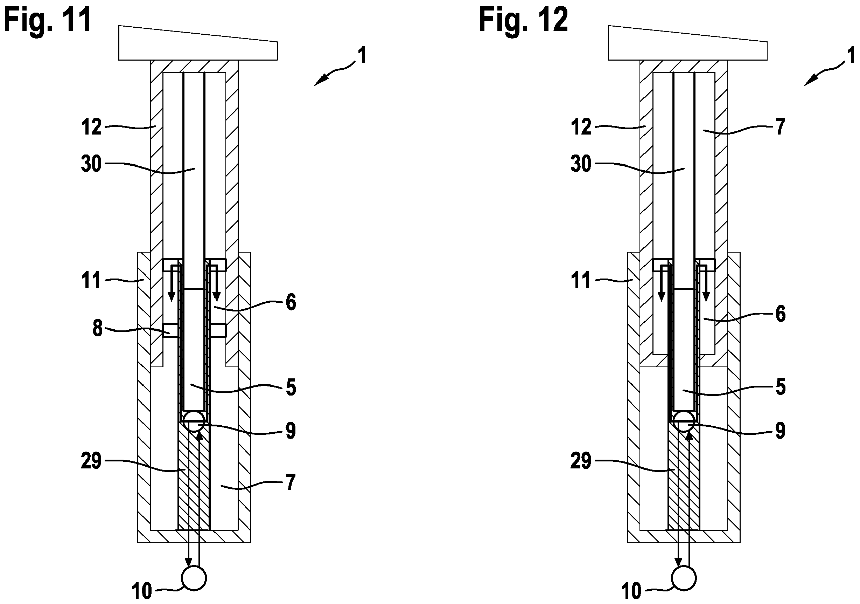

Figur 11 zeigt schematisch ein zehntes Ausführungsbeispiel der Sattelstütze 1. Wiederum weist das erste Rohr 11 das Zylinderelement 29 auf, in dem das Kolbenelement 30 des zweiten Rohrs 12 geführt ist. Das Zylinderelement 29 umschließt wiederum die erste Fluidkammer 5. Die zweite Fluidkammer 6 ist vollständig in dem zweiten Rohr 12 angeordnet. Insbesondere ist das zehnte Ausführungsbeispiel identisch zu dem neunten Ausführungsbeispiel ausgebildet, wobei lediglich das Kolbenelement 30 nicht hohl ausgebildet ist und somit das Volumen der ersten Fluidkammer 5 und der zweiten Fluidkammer 6 im Allgemeinen verringert ist.

Figur 12 zeigt schematisch ein elftes Ausführungsbeispiel der Sattelstütze 1. Dieses Ausführungsbeispiel ist grundsätzlich identisch zu dem zehnten Ausführungsbeispiel ausgebildet, wobei vorgesehen ist, dass die Luftkammer 7 vollständig in dem ersten Rohr 12 angeordnet ist, während in dem zehnten Ausführungsbeispiel die Luftkammer 7 sowohl durch das erste Rohr 11, als auch durch das zweite Rohr 12 begrenzt wurde.

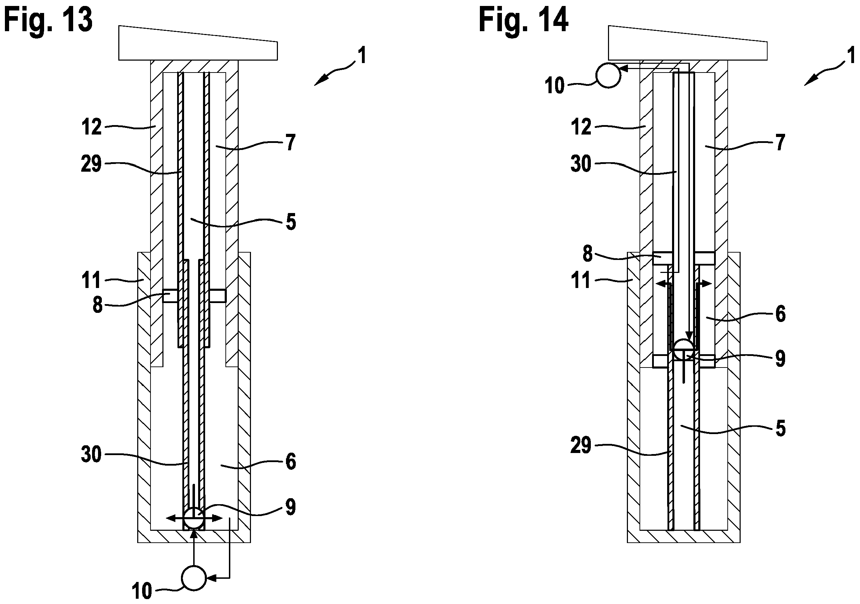

Figur 13 zeigt schematisch eine zwölfte Ausführungsform der Sattelstütze 1. Hierbei ist vorgesehen, dass das erste Rohr 11 das Kolbenelement 30 umfasst, während das zweite Rohr 12 das Zylinderelement 29 aufweist. Das zwölfte Ausführungsbeispiel ist identisch zu dem neunten Ausführungsbeispiel ausgebildet, wobei lediglich die Anordnung von Kolbenelement 30 und Zylinderelement 29 vertauscht ist.

Figur 14 zeigt schematisch ein dreizehntes Ausführungsbeispiel der Sattelstütze 1. Hierbei ist insbesondere derselbe Aufbau realisiert wie in dem elften Ausführungsbeispiel, wobei die Ventilvorrichtung 9 nicht wie im elften Ausführungsbeispiel in dem Zylinderelement 29, sondern stattdessen in dem Kolbenelement 30 angebracht ist.

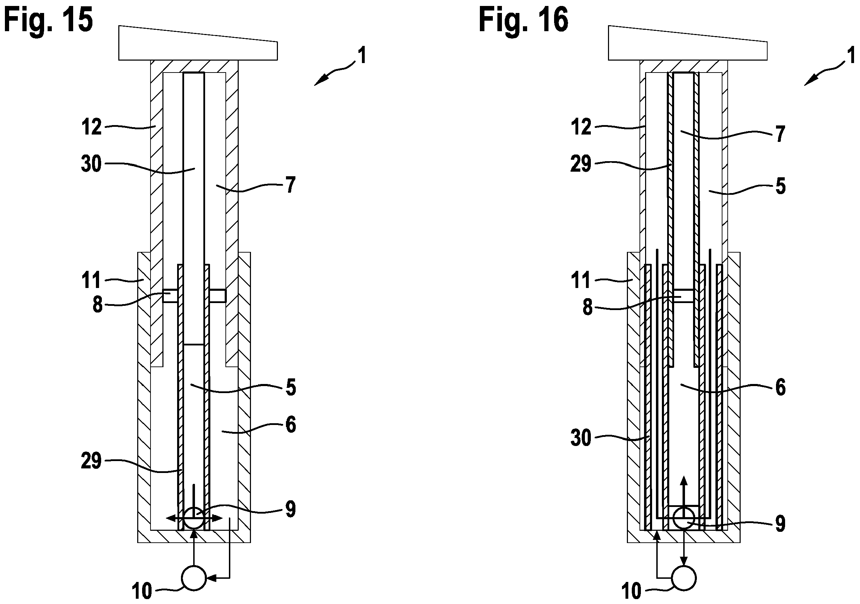

Das in Figur 15 gezeigte vierzehnte Ausführungsbeispiel der Sattelstütze 1 ist grundsätzlich identisch zu dem zwölften Ausführungsbeispiel der Sattelstütze 1 ausgebildet, wobei wiederum Zylinderelement 29 und Kolbenelement 30 vertauscht sind. Somit insbesondere auch die Ventilvorrichtung 9 statt in dem Kolbenelement 30 wie im zwölften Ausführungsbeispiel im Zylinderelement 29 angeordnet.

Figur 16 zeigt ein fünfzehntes Ausführungsbeispiel der Sattelstütze 1. Wiederum ist ein Zylinderelement 29 vorhanden, wobei in dem fünfzehnten Ausführungsbeispiel das Zylinderelement 29 nicht die erste Fluidkammer 5 beinhaltet. Vielmehr ist die erste Fluidkammer 5 zwischen einer Außenwand des zweiten Rohrs 12 und dem Zylinderelement 29 gebildet. Innerhalb des Zylinderelements 29 ist insbesondere die Luftkammer 7 angeordnet und ist vorteilhafterweise der Kolben 8 geführt. Die zweite Fluidkammer 6 erstreckt sich von dem Zylinderelement 29 bis in das erste Rohr 11. Das erste Rohr 11 weist außerdem das Kolbenelement 30 auf, das in dem fünfzehnten Ausführungsbeispiel als Hohlkolbenelement gebildet ist und somit in den Zwischenraum zwischen Zylinderelement 29 und Außenwand des zweiten Rohrs 12 eingreifen kann.

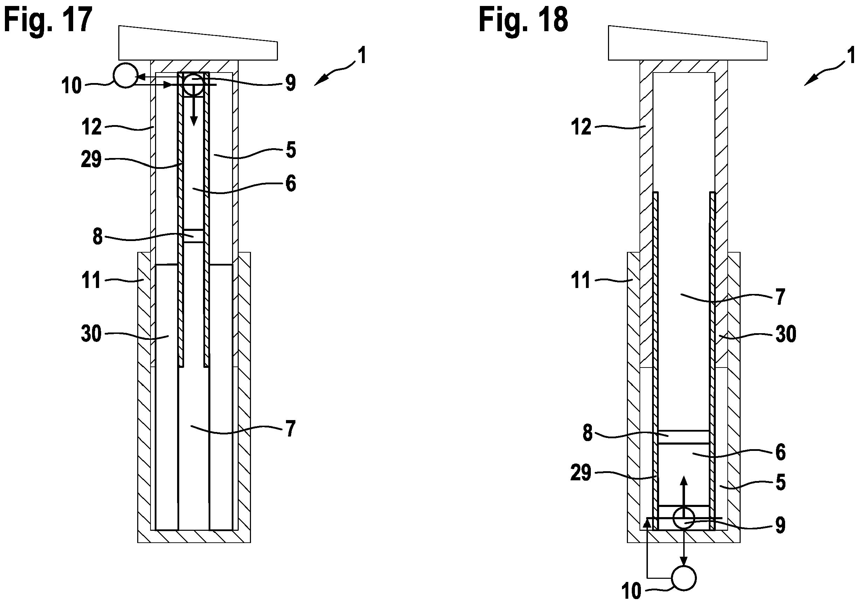

Figur 17 zeigt ein sechzehntes Ausführungsbeispiel der Sattelstütze 1. Hierbei ist die Ventilvorrichtung 9 nicht wie im fünfzehnten Ausführungsbeispiel an dem Kolbenelement 30 angebracht, sondern an dem Zylinderelement 29. dadurch sind die zweite Fluidkammer 6 und Luftkammer 7 bezüglich des fünfzehnten Ausführungsbeispiels vertauscht. Ansonsten ist der Aufbau und die Funktionalität identisch wie in dem fünfzehnten Ausführungsbeispiel.

Figur 18 zeigt ein siebzehntes Ausführungsbeispiel der Sattelstütze 1, das komplementär zu dem fünfzehnten Ausführungsbeispiel ist. Dies bedeutet, dass Zylinderelement 29 und Kolbenelement 30 vertauscht sind. Somit ist das Kolbenelement 30 an dem zweiten Rohr 12 angebracht, während das Zylinderelement 29 an dem ersten Rohr 11 angeordnet ist. Ansonsten sind Funktionsweise und Aufbau identisch zu dem fünfzehnten Ausführungsbeispiel.

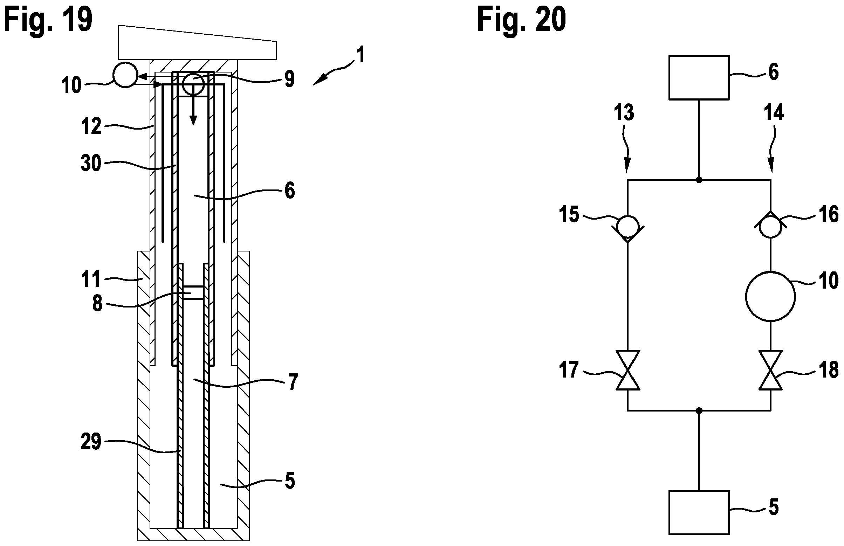

Figur 19 zeigt schließlich ein achtzehntes Ausführungsbeispiel der Sattelstütze 1. Dieses Ausführungsbeispiel ist komplementär zu der in Figur 17 gezeigten Sattelstütze 1 ausgebildet, das heißt komplementär zu dem sechzehnten Ausführungsbeispiel. Wiederum sind lediglich das Zylinderelement 29 und Kolbenelement 30 bezüglich des sechzehnten Ausführungsbeispiels vertauscht, wobei eine Funktionalität und ein Aufbau ansonsten identisch sind wie im sechzehnten Ausführungsbeispiel.

Figur 20 zeigt schematisch einen Aufbau der Ventilvorrichtung 9 zum Austauschen von Fluid zwischen der ersten Fluidkammer 5 und der zweiten Fluidkammer 6. Dabei umfasst die Ventilvorrichtung 9 einen ersten Zweig 13 und einen zweiten Zweig 14. Der erste Zweig 13 dient ausschließlich zum Fördern von Fluid von der ersten Fluidkammer 5 zu der zweiten Fluidkammer 6, das heißt zum Absenken der Sattelstütze 1. Der zweite Zweig 14 dient ausschließlich zum Fördern von Fluid von der zweiten Fluidkammer 6 zu den ersten Fluidkammer 5 und damit zum Anheben der Sattelstütze 1.

Um diese Trennung zwischen erstem Zweig 13 und zweitem T-Zweig 14 zu erreichen, ist vorgesehen, dass der erste Zweig 13 ein erstes Rückschlagventil aufweist. Der zweite Zweig 14 weist ein zweites Rückschlagventil 16 auf. Das erste Rückschlagventil 15 erlaubt ausschließlich einen Fluidfluss von der ersten Fluidkammer 5 zu der zweiten Fluidkammer 6. Das zweite Rückschlagventil 16 erlaubt ausschließlich einen Fluidfluss von der zweiten Fluidkammer 6 zu der ersten Fluidkammer 5. Durch die Parallelschaltung von erstem Zweig 13 und zweitem Zweig 14 ist somit ein vollständiger Austausch von Fluid zwischen der ersten Fluidkammer 5 und der zweiten Fluidkammer 6 ermöglicht. Allerdings ist in jedem Zweig 13 nur der Durchfluss in einer Richtung möglich.

In dem zweiten Zweig 14 ist außerdem die Pumpvorrichtung 10 angeordnet. Somit kann Fluid von der zweiten Fluidkammer 6 in die erste Fluidkammer 5 gepumpt werden, um dadurch ein Anheben der Sattelstütze 1 auch dann zu ermöglichen, wenn diese durch einen Benutzer nicht entlastet ist.

Zum Ansteuern der Funktionalität der Sattelstütze 1 ist in dem ersten Zweig 13 ein erstes Ventil und in dem zweiten Zweig 14 ein zweites Ventil 18 vorgesehen. Sowohl das erste Ventil 17, als auch das zweite Ventil 18 lasen sich vorteilhafterweise elektrisch ansteuern. Durch das erste Ventil 17 und das zweite Ventil 18 lassen sich somit unterschiedliche Funktionen der Sattelstütze 1 steuern. Soll die Sattelstütze gehalten werden, so sind sowohl das erste Ventil 17, als auch das zweite Ventil 18 geschlossen. Ein Fluid-Austausch zwischen erster Fluidkammer 5 und zweiter Fluidkammer 6 kann damit nicht erfolgen. Eine Höhe der Sattelstütze bleibt damit unverändert. Soll der Sattel 3 abgesenkt werden, so erfolgt ein Öffnen des ersten Ventils 17. Dies führt zu einem Fluidfluss von der ersten Fluidkammer 5 zu der zweiten Fluidkammer 6, wodurch die Sattelstütze 1 abgesenkt wird. Soll der Sattel 3 angehoben werden, so erfolgt ein Öffnen des zweiten Ventils 18. Insbesondere mit Unterstützung der Pumpvorrichtung 10 kann Fluid von der zweiten Fluidkammer 6 zu der ersten Fluidkammer 5 gefördert werden, wodurch die Sattelstütze 1 angehoben wird.

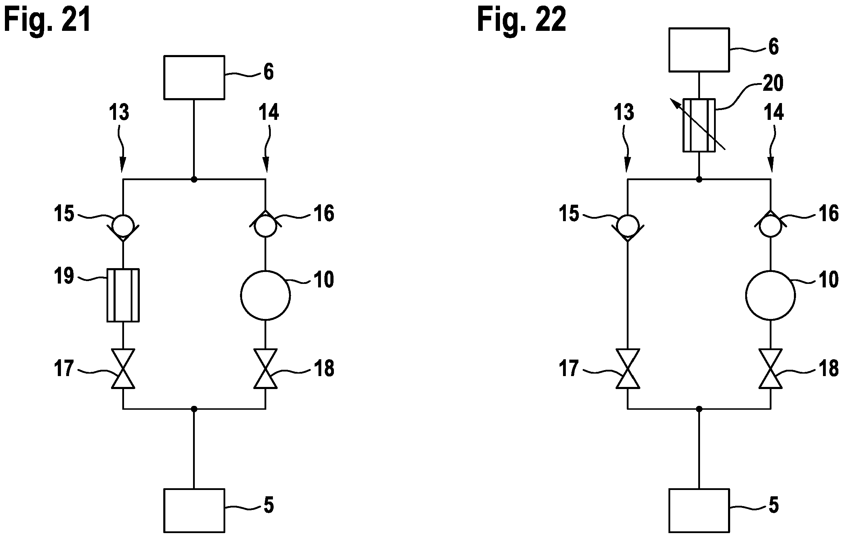

Figur 21 zeigt den Aufbau aus Figur 20, wobei zusätzlich eine feste Drossel 19 in dem ersten Zweig 13 vorhanden ist. Auf diese Weise ist insbesondere eine Absenkgeschwindigkeit der Sattelstütze bremsbar. Dadurch reduziert sich die Absenkgeschwindigkeit, wodurch ein hartes Aufschlagen an der unteren Endlage vermieden werden kann.

Eine Alternative ist in Figur 22 gezeigt. Hier ist seriell zu dem parallel angeordneten ersten Zweig 13 sowie zweiten Zweig 14 eine einstellbare Drossel 20 angeordnet. Mittels der einstellbaren Drossel ist ein gesamter Fluidfluss zwischen erster Fluidkammer 5 und zweiter Fluidkammer 6 einstellbar. Insbesondere kann die regelbare Drossel eine Absenkgeschwindigkeit variabel einstellen. Außerdem kann eine Anhebegeschwindigkeit durch die einstellbare Drossel 20 eingestellt werden.

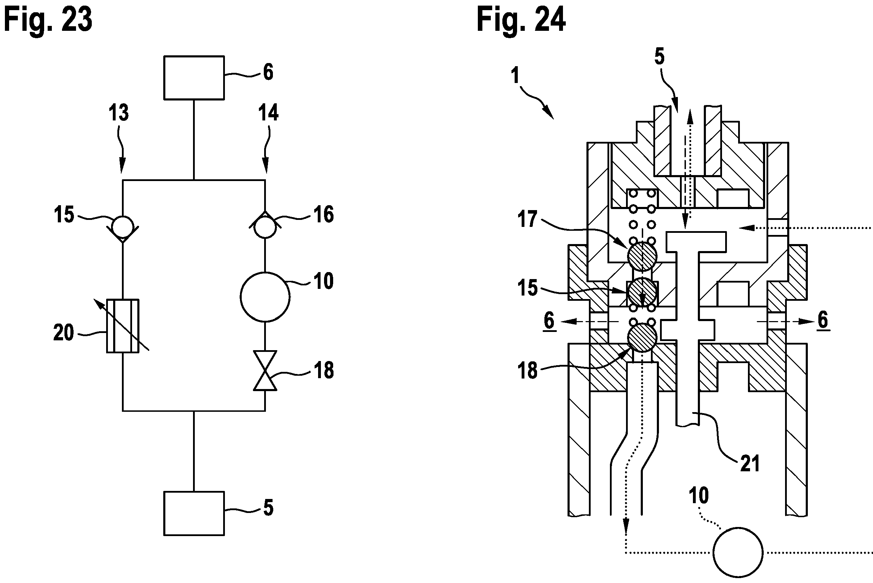

In Figur 23 ist eine Alternative gezeigt, in der das erste Ventil 17 durch die einstellbare Drossel 20 ersetzt ist. Somit kann mittels der einstellbaren Drossel 20 ein Fluidfluss durch den ersten Zweig 13 entweder vollständig verhindert oder gedrosselt werden. Somit ist wiederum eine Absenkgeschwindigkeit der Sattelstütze 1 einstellbar, um harte Aufschläge zu verhindern.

Die Figuren 24 bis 27 zeigen verschiedene Ausführungen der Ventilvorrichtung 5 der Sattelstütze 1. So zeigt Figur 24 eine beispielhafte Umsetzung des in Figur 20 schematisch gezeigten Konzepts der Ventilvorrichtung 5. So ist sowohl das erste Ventil 17, als auch das zweite Ventil 18 durch eine federbelastete Kugel realisiert, die in einem Ventilsitz angebracht ist und somit zu einer vollständigen Abdichtung führt. Über eine Nockenwelle 21 lässt sich jede dieser Kugel verschieben, um somit das erste Ventil 17 und das zweite Ventil 18 zu öffnen.

In Figur 24 ist anhand von gestrichelten Pfeilen ein Fluidfluss von der ersten Fluidkammer 5 zu der zweiten Fluidkammer 6 gezeigt. Weiterhin ist in Figur 24 anhand von gepunkteten Linien ein Fluidfluss von der zweiten Fluidkammer 6 zu der ersten Fluidkammer 5 gezeigt. Dabei durchläuft der Fluidfluss die Pumpvorrichtung 10, von der lediglich eine Zuleitung gezeigt ist. Das zweite Rückschlagventil 16 ist vorteilhafterweise ebenfalls in dieser Pumpvorrichtung 10 realisiert und in Figur 24 nicht gezeigt.

Durch eine Wahl eines Querschnitts zwischen erstem Rückschlagventil 15 und erstem Ventil 17 lässt sich vorteilhafterweise auch die Funktionalität der konstanten Drossel 19 wie in Figur 21 gezeigt realisieren.

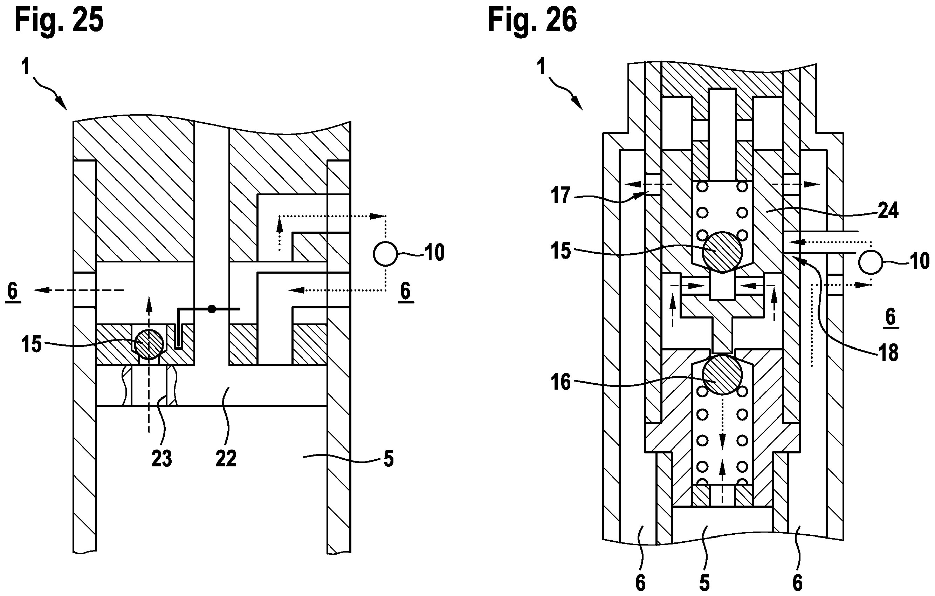

Figur 25 zeigt ein weiteres Beispiel einer Umsetzung des in Figur 20 gezeigten Konzepts der Ventilanordnung 9. Wiederum ist ein Ausschnitt aus der Sattelstütze 1 gezeigt, wobei ein Fluidfluss zwischen erster Fluidkammer 5 und zweiter Fluidkammer 6 durch einen Rotationskolben 22 mit zumindest einer Durchlassbohrung 23 eingestellt werden kann. Der Rotationskolben zusammen mit der Durchlassbohrung 23 übernimmt die Funktion von erstem Ventil 17 und zweitem Ventil 18. Zusätzlich ist in Figur 25 das erste Rückschlagventil 15 dargestellt. Ist der Rotationskolben 22 derart orientiert, dass die Durchlassbohrung 23 fluchtend mit dem ersten Rückschlagventil 15 angeordnet ist, so kann der gestrichelte Fluidverlauf umgesetzt werden. Hierbei gelangt Fluid von der ersten Fluidkammer 5 zu der zweiten Fluidkammer 6. Ist hingegen der Rotationskolben 22 derart rotiert, dass die Durchgangsbohrung 23 die erste Fluidkammer 5 mit der Pumpvorrichtung 10 verbindet, so lässt sich Fluid von der zweiten Fluidkammer 6 ausschließlich über die Pumpvorrichtung 10 in die erste Fluidkammer 5 überführen. Wiederum ist die Funktionalität des zweiten Rückschlagventils 16 durch die Pumpvorrichtung 10 realisiert. Aufgrund des ersten Rückschlagventils 15 kann kein Fluid von der zweiten Fluidkammer 6 in die erste Fluidkammer 5 unter Umgehung der Pumpvorrichtung 10 gelangen.

Um eine Sattelhöhe zu verstellen, ist somit lediglich der Rotationskolben 22 zu rotieren, um die Durchgangsbohrung 23 entsprechend auszurichten.

Figur 26 zeigt eine weitere beispielhafte Umsetzung des schematischen Konzepts wie in Figur 20 gezeigt. In diesem Beispiel ist ein durch einen Aktuator beweglicher Verschiebekolben 24 vorhanden. Der Verschiebekolben 24 kann einerseits verschoben werden, um einen Durchgang zu der zweiten Fluidkammer 5 freizugeben. Auf diese Weise ist die Funktionalität des ersten Ventils 17 gebildet. Außerdem ist durch den Verschiebekolben 24 das zweite Ventil 18 gebildet, in dem ein Zufluss zu der Pumpvorrichtung 10 freigebbar oder verschließbar ist.

Zusätzlich ist in dem Verschiebekolben 24 das erste Rückschlagventil 15 vorgesehen, das eine federbelastete Kugel umfasst. Schließlich ist als federbelastete Kugel das zweite Rückschlagventil 16 vorgesehen.

Erfolgt ein Fluidfluss von der ersten Fluidkammer 5 zu der zweiten Fluidkammer 6, so sind die gestrichelt dargestellten Pfeile relevant. Aufgrund einer Verschiebung des Verschiebekolbens 24 ist einerseits das erste Ventil 17 geöffnet, andererseits wird das zweite Rückschlagventil 16 freigegeben. Somit kann ein Fluidfluss durch den Verschiebekolben 24 erfolgen, wobei das erste Rückschlagventil 15 funktionsgemäß geöffnet wird. Fluid kann somit von der ersten Fluidkammer 5 in die zweite Fluidkammer 6 gelangen. Wird hingegen der Verschiebekolben 24 derart verschoben, dass das zweite Ventil 18 geöffnet und das erste Ventil 17 geschlossen ist, so kann Fluid von der zweiten Fluidkammer 6 über die Pumpvorrichtung 10 zu dem zweiten Rückschlagventil 16 gefördert worden, wobei das zweite Rückschlagventil 16 funktionsgemäß öffnet. Damit kann Fluid von der zweiten Fluidkammer 6 zu der ersten Fluidkammer 5 gelangen.

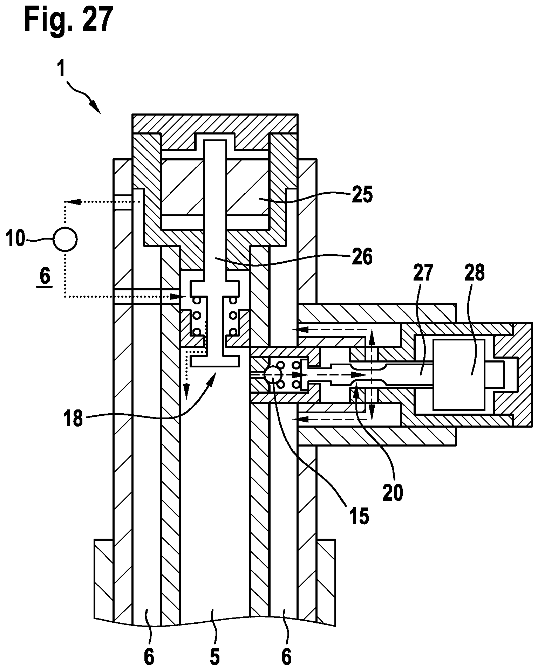

Schließlich zeigt Figur 27 eine beispielhafte Umsetzung des in Figur 23 gezeigten Konzepts der Ventilvorrichtung 9. Hierzu sind ein erster Aktuator 25 und ein erster Schieber 26 sowie ein zweiter Aktuator 28 und ein zweiter Schieber 27 vorhanden. Der erste Schieber 26 und der zweite Schieber 27 bilden insbesondere eigenständige Ventile.

So ist durch den zweiten Schieber 27 die einstellbare Drossel 20 realisiert, die als erstes Ventil 17 wirkt. Der erste Schieber 26 stellt das zweite Ventil 18 dar. Soll Fluid von der ersten Fluidkammer 5 entlang der gestrichelten Pfeile zu der zweiten Fluidkammer 6 gefördert werden, so erfolgt dies durch das Einstellen eines Öffnungsgrads mittels des zweiten Schiebers 27. Anhand einer Einstellung des zweiten Schiebers 27 kann somit eine Durchflussgeschwindigkeit eingestellt werden, sodass eine Absenkgeschwindigkeit der Sattelstütze 1 vorgegeben ist. Bleibt hingegen die einstellbare Drossel 20 vollständig geschlossen, so kann mittels des ersten Schiebers 26 das zweite Ventil 18 geöffnet werden, um dadurch Fluid aus der zweiten Fluidkammer 6 über die Pumpvorrichtung 10 zu der ersten Fluidkammer 5 zu fördern.

Wiederum ist das erste Rückschlagventil 15 vorgesehen, um einen ungewollten Fluidfluss von der zweiten Fluidkammer 6 zu der ersten Fluidkammer 5 zu verhindern. Die Funktionalität des zweiten Rückschlagventils 16 ist wiederum in der Pumpvorrichtung 10 integriert.

In den Figuren 24 bis 27 ist beispielhaft gezeigt, wie die Ventilvorrichtungen 9 im Inneren der Sattelstütze 1 verbaut sind. In einer alternativen Ausgestaltung können die Ventilvorrichtungen 9 auch außerhalb der Sattelstütze angebracht werden. Beispielsweise können die einzelnen Ventilvorrichtungen 9 zusammen mit der Pumpvorrichtung10 in einer externen Box außerhalb der Sattelstütze angebracht sein. Die externe Box kann vorteilhafterweise an dem Sattel 3, der an der Sattelstütze 1 angebracht ist, befestigt werden.

Die Sattelstütze 1 ermöglicht somit in einer Vielzahl von unterschiedlichen Ausgestaltungen ein komfortables Anheben und Absenken des Sattels 3. Insbesondere ist der Vorgang des Absenkens ebenso wie der Vorgang des Anhebens automatisierbar und unabhängig von einer aktuellen Belastung oder Entlastung des Sattels 3 durch den Benutzer durchführbar. Somit ist ein einfaches, aufwandsarmes und vorteilhaft einsetzbares System erreicht, das ein komfortables Steuern einer Sattelhöhe eines Fahrrads ermöglicht.

## Patentansprüche

1. Sattelstütze (1) eines Fahrrads (2), aufweisend
ein mit einem Rahmen (4) des Fahrrads (2) verbindbares erstes Rohr (11), ein mit einem Sattel (3) verbindbares zweites Rohr (12),
wobei das erste Rohr (11) und das zweite Rohr (12) ineinander einschiebbar sind,
wobei in dem ersten Rohr (11) und/oder dem zweiten Rohr (12) eine erste Fluidkammer (5) und eine davon abgetrennte zweite Fluidkammer (6) gebildet sind,
wobei zumindest die erste Fluidkammer (5) sowohl durch das erste Rohr (11) als auch durch das zweite Rohr (12) begrenzt ist, sodass anhand eines Volumens der ersten Fluidkammer (5) einstellbar ist, wie weit das erste Rohr (11) und das zweite Rohr (12) ineinander eingeschoben sind,
wobei ein Fluidfluss zwischen erster Fluidkammer (5) und zweiter Fluidkammer (6) durch eine Ventilvorrichtung (9) einstellbar ist, und
wobei durch eine Pumpvorrichtung (10) Fluid von der zweiten Fluidkammer (6) in die erste Fluidkammer (5) pumpbar ist.

2. Sattelstütze (1) nach Anspruch 1, **dadurch gekennzeichnet, dass** eine Luftkammer (7) über einen Kolben (8) von der ersten Fluidkammer (5) oder von der zweiten Fluidkammer (6) abgegrenzt ist, wobei eine Volumenänderung der ersten Fluidkammer (5) und/oder zweiten Fluidkammer (6) zu einer Kompression oder Dekompression eines Gases, insbesondere von Luft, innerhalb der Luftkammer (7) führt.

3. Sattelstütze (1) nach einem der vorhergehenden Ansprüche, **dadurch gekennzeichnet, dass** das erste Rohr (11) oder das zweite Rohr (12) ein Abtrennelement (28) aufweist, das zum Abtrennen von erster Fluidkammer (5) und zweiter Fluidkammer (6) ausgebildet ist, und das insbesondere die Ventilvorrichtung (9) aufweist.

4. Sattelstütze (1) nach einem der vorhergehenden Ansprüche, **dadurch gekennzeichnet, dass** das erste Rohr (11) ein die erste Fluidkammer (5) von der zweiten Fluidkammer (6) abgrenzendes Zylinderelement (29) aufweist, in dem ein Kolbenelement (30) des zweiten Rohres (12) geführt ist oder dass das zweite Rohr (12) ein die erste Fluidkammer (5) von der zweiten Fluidkammer (6) abgrenzendes Zylinderelement (29) aufweist, in dem ein Kolbenelement (30) des ersten Rohres (11) geführt ist, wobei insbesondere die erste Fluidkammer (5) durch Zylinderelement (29) und Kolbenelement (30) begrenzt ist.

5. Sattelstütze (1) nach einem der vorhergehenden Ansprüche, **dadurch gekennzeichnet, dass** die Ventilvorrichtung (9) einen ersten Zweig (13) und einen zweiten Zweig (14) aufweist,
• wobei der erste Zweig (13) ein erstes Rückschlagventil (15) aufweist, das lediglich einen Fluidfluss von der ersten Fluidkammer (5) in die zweite Fluidkammer (6) ermöglicht,
• wobei der zweite Zweig (14) ein zweites Rückschlagventil (16) aufweist, das lediglich einen Fluidfluss von der zweiten Fluidkammer (6) in die erste Fluidkammer (5) ermöglicht, und
• wobei die Pumpvorrichtung (10) in dem zweiten Zweig (14) angeordnet ist.

6. Sattelstütze (1) nach Anspruch 5, **dadurch gekennzeichnet, dass** in dem ersten Zweig (13) ein erstes Ventil (17) und in dem zweiten Zweig (14) ein zweites Ventil (18) vorgesehen ist, wobei durch das erste Ventil (17) ein Durchfluss durch den ersten Zweig (13) und durch das zweite Ventil (17) ein Durchfluss durch den zweiten Zweig (14) wahlweise freigebbar und sperrbar ist.

7. Sattelstütze (1) nach Anspruch 6, **dadurch gekennzeichnet, dass** das erste Ventil (17) eine einstellbare Drossel (20) ist, wobei die einstellbare Drossel (20) zum vollständigen verschließen des ersten Zweigs (14) ausgebildet ist.

8. Sattelstütze (1) nach Anspruch 5 oder 6, **dadurch gekennzeichnet, dass** eine einstellbare Drossel (20) seriell zu dem ersten Zweig (13) und dem zweiten Zweig (14) angeordnet ist.

9. Sattelstütze (1) nach Anspruch 5 oder 6, **dadurch gekennzeichnet, dass** in dem ersten Zweig (13) eine konstante Drossel (19) angeordnet ist.

10. Fahrrad (2) umfassend eine Sattelstütze (1) nach einem der vorhergehenden Ansprüche, wobei durch die Sattelstütze (1) ein Sattel (3) an einem Rahmen (4) des Fahrrads (2) angebracht ist.
